# EUROPEAN PATENT APPLICATION

(11) **EP 4 357 870 A1**
(43) Date of publication of application: **24.04.2024**
(21) Application number: 22824197.2
(22) Date of filing: 14.06.2022
(51) Int. Cl.: G05D 1/02

(54) **SELF-MOVING DEVICE AND OBSTACLE AVOIDANCE CONTROL METHOD, AND STORAGE MEDIUM**

(30) Priority: 17.06.2021 CN 202110673170
(71) Applicant: Positec Power Tools (Suzhou) Co., Ltd., Suzhou, Jiangsu 215123 (CN)
(72) Inventor: PAOLO, Andriolo, 36100 Vicenza (IT); EMANUEL, Conti, 36100 Vicenza (IT); DAVIDE, Dalfra, 36100 Vicenza (IT)
(74) Representative: Kilburn & Strode LLP
(86) International application number: PCT/CN2022/098642
(87) International publication number: WO 2022/262718

(57) **Abstract**

The present disclosure relates to a self-moving device, an obstacle avoidance control method, and a storage medium. In an embodiment, detection data of an obstacle in a moving direction of the self-moving device is obtained, and a distance to the obstacle is obtained through calculation according to the detection data of the obstacle, or a distance between the self-moving device and the obstacle obtained by another device according to the detection data is received. When the distance between the self-moving device and the obstacle is between a first preset distance and a second preset distance, the self-moving device maintains an original moving speed and an original moving direction and moves forward stably. When the second preset distance is reached, turning is performed at the original moving speed or a faster moving speed, thereby completing timely and fast turning while completing more working regions to the greatest extent, so that the self-moving device turns more safely and more reliably, and the operating efficiency is also improved.

## Description

### TECHNICAL FIELD

The present disclosure relates to the field of data processing technologies of self-moving devices, and in particular, to a self-moving device, an obstacle avoidance control method, and a storage medium.

### BACKGROUND

With the development of science and technology, more and more automatic processing devices enter people's life, for example, an automatic lawn mower, an automatic sweeping robot, an automatic delivery machine, and the like. These self-moving devices bring great convenience to people's production and life.

These self-moving devices usually operate according to a set route or a set working manner. If encountering an obstacle during operation, a self-moving device needs to identify and avoid the obstacle. Currently, a commonly used obstacle avoidance method is mainly to mount an ultrasonic sensor on the self-moving device and use the ultrasonic sensor to emit and receive an ultrasonic signal to identify the obstacle. After the obstacle is identified, a controller on the self-moving device controls the self-moving device to turn to avoid the obstacle. In some operating scenarios, an operating environment is complex, which often leads to untimely avoidance of the self-moving device, causing damage to the obstacle or the self-moving device.

Therefore, there is an urgent need for a solution that can make the self-moving device avoid the obstacle more effectively and in a timely manner.

### SUMMARY

The present disclosure provides a self-moving device, an obstacle avoidance control method, and a storage medium, which can avoid an obstacle faster and in time, and ensure the safety of the obstacle and the self-moving device. Technical solutions of the present disclosure are as follows:
According to an aspect of embodiments of the present disclosure, a self-moving device is provided, including:
a main body; and
a controller, the controller being disposed in the main body, and the controller being configured to: determine a distance between the self-moving device and an obstacle; when the distance is between a first preset distance and a second preset distance, control the self-moving device to maintain an original moving speed and an original moving direction; and when the distance reaches the second preset distance, send a turning signal, where the turning signal is used for controlling the self-moving device to turn at a speed greater than or equal to the original moving speed, and the original moving speed and the original moving direction are a moving speed and a moving direction of the self-moving device when the distance reaches the first preset distance, where the second preset distance is less than the first preset distance.

According to another aspect of the embodiments of the present disclosure, in the self-moving device, the turning signal is further used for controlling the self-moving device to turn at a preset turning angle.

According to another aspect of the embodiments of the present disclosure, in the self-moving device, a value range of the first preset distance is from 40 cm to 60 cm; and a value range of the second preset distance is from 10 cm to 20 cm.

According to another aspect of the embodiments of the present disclosure, in the self-moving device, the second preset distance is determined according to a current moving speed of the self-moving device, or is preset according to moving speed information included in product information of the self-moving device.

According to another aspect of the embodiments of the present disclosure, in the self-moving device, that the control signal is used for controlling the self-moving device to turn at a speed greater than or equal to the original moving speed includes:
turning at a first speed difference, where the first speed difference is that in the moving direction of the self-moving device, a rotation speed of a moving wheel on a side is faster than a rotation speed of a moving wheel on another side.

According to another aspect of the embodiments of the present disclosure, in the self-moving device, the controlling the self-moving device to turn at a speed greater than or equal to the original moving speed includes:
controlling the self-moving device to continue turning at a first turning rate for a preset time length.

According to another aspect of the embodiments of the present disclosure, the self-moving device further includes an obstacle detector, where the obstacle detector is connected to the controller of the main body, and the obstacle detector is configured to: obtain detection data of the obstacle, obtain the distance between the self-moving device and the obstacle according to the detection data, and send the distance to the controller, or send obtained detection data of the obstacle to the controller, to cause the controller to determine the distance between the self-moving device and the obstacle according to the detection data.

According to another aspect of the embodiments of the present disclosure, in the self-moving device, the obstacle detector includes at least one of following:
an energy wave sensor, configured to emit an energy wave and receive a reflected signal of the energy wave, where the detection data includes data information emitted by the energy wave and the reflected signal;
an image capture apparatus, configured to obtain image data of the obstacle, where the detection data includes the image data.

According to another aspect of the embodiments of the present disclosure, in the self-moving device, a correspondence between the second preset distance and the preset turning angle is a negative correlation.

According to another aspect of the embodiments of the present disclosure, in the self-moving device, the controller is further configured to:
when it is detected that the distance to the obstacle is less than an alert distance, increase a data processing speed, or send an alert processing signal to the obstacle detector, where the alert processing signal is used for controlling the obstacle detector to increase a detection frequency on the obstacle.

According to another aspect of the embodiments of the present disclosure, an obstacle avoidance control method for a self-moving device is further provided, including:
determining a distance between the self-moving device and an obstacle;
when the distance is between a first preset distance and a second preset distance, controlling the self-moving device to maintain an original moving speed and an original moving direction; and
when the distance reaches the second preset distance, send a turning signal, where the turning signal is used for controlling the self-moving device to turn at a speed greater than or equal to the original moving speed, and the original moving speed and the original moving direction are a moving speed and a moving direction of the self-moving device when the distance reaches the first preset distance, where the second preset distance is less than the first preset distance.

According to another aspect of the embodiments of the present disclosure, a computer-readable storage medium is further provided. When instructions in the storage medium are executed by a processor of an electronic device, the electronic device is caused to perform the method according to any embodiment of the present disclosure.

According to another aspect of the embodiments of the present disclosure, a computer program product is further provided, including a computer program, where when the computer program is executed by a processor, the method according to any embodiment of the present disclosure is implemented.

In the technical solutions provided in the embodiments of the present disclosure, the detection data of the obstacle in the moving direction of the self-moving device can be obtained, and the distance to the obstacle can be obtained through calculation according to the detection data of the obstacle, or the distance between the self-moving device and the obstacle obtained by another device according to the detection data can be received. When the distance between the self-moving device and the obstacle is between the first preset distance and the second preset distance, the self-moving device maintains the original moving speed and the original moving direction and moves forward stably. When the second preset distance is reached, turning is performed at the original moving speed or a faster moving speed, thereby completing timely and fast turning while completing more operating regions to the greatest extent, so that the self-moving device turns more safely and more reliably, and the operating efficiency is also improved.

It should be understood that the foregoing general description and the following detailed description are merely for exemplary and explanatory purposes, and cannot limit the present disclosure.

### BRIEF DESCRIPTION OF THE DRAWINGS

The accompanying drawings herein, which are incorporated into this specification and constitute a part of this specification, show embodiments that conform to the present disclosure, are used for describing a principle of the present disclosure together with this specification, and do not constitute an improper limitation on the present disclosure.
FIG. 1 is a schematic structural diagram of an embodiment of a self-moving device according to an exemplary embodiment.
FIG. 2 is a schematic diagram of scenario comparison of an embodiment in which a self-moving device turns fast at a large angle to avoid an obstacle provided in this specification.
FIG. 3 is a schematic structural diagram of an embodiment of another self-moving device according to an exemplary embodiment.
FIG. 4 is a schematic structural diagram of an obstacle detector according to an exemplary embodiment.
FIG. 5 is a schematic flowchart of an obstacle avoidance control method for a self-moving device according to an exemplary embodiment.
FIG. 6 is a schematic structural diagram of a controller 14 according to this specification.

Attached drawing markings:
100-Self-moving device; 12- Obstacle detection device; 14- Controller; 120- Energy wave sensor; 122- Image capture apparatus; 10- processor; 20- Memory; 30- Transmission module; A1-Turning angle of normal turning; A2- Preset turning angle.

### DETAILED DESCRIPTION

To make an ordinary person in the art understand the technical solutions in this application better, the following clearly and completely describes the technical solutions in embodiments of the present disclosure with reference to the accompanying drawings.

It should be noted that, in the specification, claims, and accompanying drawings of the present disclosure, the terms "first", "second", and so on are intended to distinguish between similar objects but do not necessarily indicate a specific order or sequence. It should be understood that such terms are interchangeable in proper circumstances, so that the embodiments of the present disclosure described herein may be implemented in orders other than the order illustrated or described herein. The implementations described in the following exemplary embodiments do not represent all implementations that are consistent with the present disclosure. Instead, the implementations are merely examples of apparatuses and methods that are consistent with some aspects of the present disclosure as recited in the appended claims. The term "include," "comprise," or any other variant thereof is intended to cover a non-exclusive inclusion, so that a process, a method, a product, or a device that includes a series of elements not only includes such elements, but also includes other elements not expressly listed, or further includes elements inherent to the process, the method, the product, or the device. Without more limitations, other same or equivalent elements are not excluded from existing in the process, the method, the product, or the device that includes the elements. For example, the words such as "first" and "second" are used to denote names, and do not denote any particular order.

In this application, when a component is referred to as "being fixed to" another component, the component may be directly placed onto the other component, or an intervening component may exist. When a component is considered to be "connected to" another component, or one component is in "connection" to another component, the component may be directly connected to the another component or there may be an intervening component. In addition, the connection should be understood in a broad sense. For example, the connection may be a fixed connection, a detachable connection or an integral connection; a mechanical connection or an electrical connection. A person of ordinary skill in the art may understand the specific meanings of the foregoing terms in the present embodiments according to specific situations.

In this specification, the terms such as "vertical", "horizontal", "left", "right", "up", "down", "front", "back", "circumferential", "moving direction" and similar expressions are based on orientation or position relationships shown in the accompanying drawings, and are used only for ease and brevity of illustration and description of the present embodiments, rather than indicating or implying that the mentioned apparatus or element needs to have a particular orientation or needs to be constructed and operated in a particular orientation. Therefore, such terms should not be construed as a limitation on the present embodiments.

Unless otherwise defined, meanings of technical and scientific terms used in this specification can be the same as those usually understood by a person skilled in the art to which the present embodiments belongs. In this specification, terms used in the specification of the present embodiments are merely intended to describe objectives of the specific embodiments, but are not intended to limit the present embodiments. The term "and/or" or "at least one" used in this specification includes any and all combinations of one or more related listed items. It should be noted that turning, deflection, and the like described in this application can include a manner in which a self-moving device stops moving and continues to move after a turning or deflection action is completed, or can include a manner in which the self-moving device turns or deflects while moving.

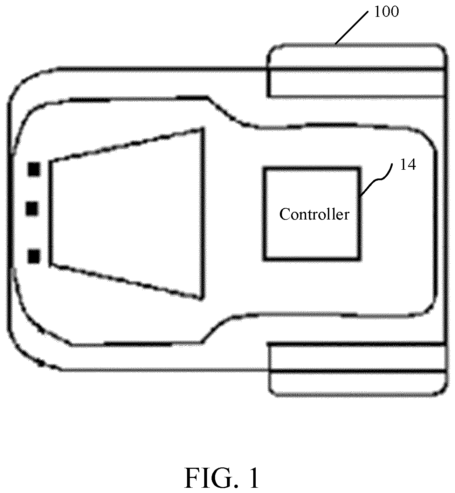

As shown in FIG. 1, an embodiment of a self-moving device provided in this specification can include:
a main body 100; and
a controller 14, the controller being disposed in the main body, and the controller being configured to: determine a distance between the self-moving device and an obstacle; when the distance is between a first preset distance and a second preset distance, control the self-moving device to maintain an original moving speed and an original moving direction; and when the distance reaches the second preset distance, send a turning signal, where the turning signal is used for controlling the self-moving device to turn at a speed greater than or equal to the original moving speed, and the original moving speed and the original moving direction are a moving speed and a moving direction of the self-moving device when the distance reaches the first preset distance, where the second preset distance is less than the first preset distance.

In this embodiment, the self-moving device may generally include a device that moves according to a predetermined moving route and a control strategy, and may include an intelligent lawn mower, a sweeping robot, an automatic delivery machine, and the like. The self-moving device generally may operate without human intervention. The self-moving device in the embodiments of this specification can be a device in contact with people or an external device. For example, the self-moving device may be provided with a handrail, and an operator may follow the self-moving device and hold the handrail of the self-moving device. However, in this case, the moving route and the control strategy of the self-moving device still come from control logic of the self-moving device. Even if the operator holds the handrail or may actively change the moving direction or a speed of the self-moving device through the handrail, this kind of device still belongs to the self-moving device described in the embodiments of this specification. Typological, a manned self-moving device may also be included.

It should be noted that, in some other embodiments, when the distance reaches the second preset distance, a turning signal is sent, where the turning signal may be used for controlling the self-moving device to turn at a speed less than the original moving speed. For example, the turning signal may be used for controlling the self-moving device to control a speed to decrease in a turning process, that is, controlling the self-moving device to perform deceleration while turning to complete turning and obstacle avoidance.

The controller 14 may have a data processing capability, and may also have a wired or wireless communication capability. For example, the controller may be or include a microcontroller unit (microcontroller unit, MCU). The controller 14 may control an apparatus on the self-moving device to emit a signal such as sound, light, an electromagnetic wave, or the like. When the signal encounters the obstacle, a part of the signal is reflected. The self-moving device may receive the reflected signal and convert the reflected signal into obstacle feedback data accordingly. Then the distance to the obstacle may be calculated according to the obstacle feedback data. Certainly, in some other implementations, the self-moving device does not have to rely on its own apparatus to detect the distance between the self-moving device and the obstacle. When the controller 14 determines the distance between the self-moving device and the obstacle, the distance to the obstacle may alternatively be determined through an apparatus on another device, a beacon marked at a fixed position, or through data information delivered by a remote server, or even by directly receiving data information about the distance between the self-moving device and the obstacle. The controller 14 may also send a control signal, such as a turning signal, or a moving or retreating signal, to control a moving direction, a moving mode, and a moving speed of the self-moving device.

In some implementations of the present disclosure, a first preset distance and a second preset distance may be set, where the second preset distance is less than the first preset distance. The second preset distance may represent a minimum safe distance from the obstacle at which the self-moving device needs to turn. For example, the second preset distance may be 20 cm, or a value range may be set to be from 10 cm to 20 cm. The first preset distance may represent a distance required to maintain the original moving speed and the original moving direction before the second preset distance is reached. For example, the first preset distance may be 40 cm, or a value range may be set to be from 40 cm to 60 cm.

Through the solution of the foregoing embodiment, when the distance between the self-moving device and the obstacle is between the first preset distance and the second preset distance, the self-moving device maintains the original moving speed and the original moving direction and moves forward stably. When the second preset distance is reached, turning is performed at the original moving speed or a faster moving speed, thereby completing timely and fast turning while completing more operating regions to the greatest extent, so that the self-moving device turns more safely and more reliably, and the operating efficiency is also improved.

The foregoing embodiment provides the value range of the first preset distance. In some other implementations, the second preset distance may also be determined according to detection sensitivity or an effective detection distance of the obstacle detector below. The detection sensitivity may refer to a maximum or farthest distance at which the device may detect the obstacle, and the effective detection distance refers to a warning distance to avoid the obstacle. It should be noted that the detection sensitivity may be the same as or different from the effective detection distance. For example, when the obstacle detector is an ultrasonic sensor, the detection sensitivity is 60 cm and the effective detection distance is 40 cm. That is to say, when the ultrasonic sensor detects an obstacle 60 cm ahead, the obstacle may be ignored, and attention is paid to the obstacle only when the obstacle is 40 cm away, which means that the obstacle may affect a moving strategy of the device, for example, a walking route needs to be changed in time to avoid the obstacle.

In some embodiments, in an operating process, the self-moving device may detect and obtain obstacle information in the moving direction in real time. The controller 14 may determine whether avoidance is required according to the obstacle feedback data. For example, for some large obstacles or obstacles that may cause damage if not avoided, such as a wall, a stone, and the like, it may be set that the obstacles need to be avoided. When it is determined that avoidance is required, the self-moving device may be controlled to avoid. For some obstacles such as a paper scrap and a leaf that do not need to be avoided, the self-moving device may continue to move.

In the self-moving device, the main body generally may include a driving device (such as a power supply), a moving apparatus (such as a moving roller or a track), a turning device (a rack and pinion turning gear and a worm and crankpin turning gear), and a corresponding operating tool (such as a lawn mowing apparatus or a cleaning apparatus). During turning, the self-moving device may turn by controlling a rotation speed difference (herein referred to as a first speed difference) between moving wheels. To ensure that the self-moving device may complete turning timely and fast, the present disclosure provides a speed difference setting method. Specifically, that the control signal is used for controlling the self-moving device to turn at a speed greater than or equal to the original moving speed includes:
turning at a first speed difference, where the first speed difference is that in the moving direction of the self-moving device, a rotation speed of a moving wheel on a side is faster than a rotation speed of a moving wheel on another side.

In this way, for example, during turning, a rotation speed of an outer moving wheel is faster than a rotation speed of an inner moving wheel by a first percentage. A value range of the first percentage may be set accordingly according to a turning control strategy. For example, in some application scenarios, the first percentage may be set to 10% to 40%, which can not only ensure that the self-moving device can complete turning fast, but also avoid cases that the device tilts or turns in place due to an excessively large first speed difference, or an actual transmission angle is larger than a preset turning angle (caused by rotational inertia) during turning, thereby improving the safety and the reliability of turning. As mentioned above, turning includes turning while moving.

It should be pointed out that in some application scenarios of the present disclosure, the implementation in which the rotation speed of the moving wheel on a side is faster than the rotation speed of the moving wheel on another side by the first percentage may include that the rotation speed of the moving wheel on a side is an original rotation speed, and the speed of the moving wheel on another side is decelerated to 0. In some other embodiments, turning may alternatively be performed in a manner that the rotation speeds of the moving wheels on both sides are constant or the first speed difference is 0. Certainly, other strategies can also be set according to a structure and a turning requirement of the self-moving device.

In this embodiment, when the self-moving device is controlled to perform actions, the rotation speed of the outer moving wheel during turning may be increased. In this way, under a same condition, since the speed of the outer moving wheel is increased, a faster turning speed can be achieved. For example, a normal moving speed of a lawn mower is 33 revolutions per minute. When the distance to the obstacle is 20 cm, the outer moving wheel still turns at the speed of 33 revolutions per minute during turning. In the solution of this embodiment, when the distance to the obstacle is 20 cm, the rotation speed of the outer moving wheel is increased to be greater than 33 revolutions per minute, and for example, turning is performed at a rotation speed of 40 revolutions per minute.

Certainly, the first speed difference may alternatively be converted into a turning angle completed per unit time accordingly, or the completion of turning of the self-moving device may be reflected by a turning angle completed per unit time. Specifically, in another embodiment of the present disclosure, the controlling the self-moving device to turn at a speed greater than or equal to the original moving speed includes:
controlling the self-moving device to continue turning at a first turning rate for a preset time length.

In some embodiments, a value range of the first turning rate may be from 3.5 degrees/second to 8 degrees/second. For example, it may be set to take 2 seconds to complete 15 degrees, that is, the self-moving device turns by 7.5 degrees per second to complete a preset turning angle of 15 degrees, or may be set to take 6 seconds to complete 30 degrees, that is, the self-moving device turns by 5 degrees per second to complete a preset turning angle of 30 degrees. In this way, the turning angle is controlled by the first turning rate and its duration, which can shield the difference in wheel sizes and complete the turning more accurately and reliably.

The preset turning angle in this embodiment may be set and adjusted according to operating requirements, different types of self-moving devices, different model sizes or moving wheel sizes of the self-moving device, or the like. The value of the preset turning angle in this embodiment is greater than a common setting parameter or an industry standard under the same condition (such as a same model, a same operating scenario, and the like).

Certainly, in other embodiments, the preset turning angle may be directly set, so that the self-moving device turns at the preset turning angle. The preset turning angle may be larger than a common set angle. For example, when the distance between the self-moving device and the obstacle is 20 cm, the turning angle is usually set to 20 degrees. In this embodiment of the present disclosure, the preset turning angle may be set to 30 degrees or 40 degrees, or even 60 degrees. Certainly, the preset turning angle may alternatively be set or adjusted according to the distance to the obstacle or a size of the self-moving device. In an embodiment of the present disclosure, a value range of the preset turning angle may be from 30 degrees to 60 degrees. For example, the preset turning angle may be set to 45 degrees. Based on a current self-moving device such as a lawn mower, a person skilled in the art usually considers stable moving of the self-moving device, so that the preset turning angle is usually set to be less than 30 degrees for slow turning to avoid the obstacle. In this embodiment, a large turning angle of greater than 30 degrees may be set to achieve fast turning and avoid the obstacle. In particular, some solutions in this embodiment may combine a preset turning angle having a large value with an increase in a turning speed to perform turning at a faster turning speed and a larger turning angle, which ensures that even at a small obstacle avoidance distance (the second preset distance), obstacle avoidance may still be completed in time, thereby ensuring the high efficiency and the reliability of obstacle avoidance.

The foregoing provides an embodiment of the value of the second preset distance or the value of the preset deflection angle. In some other implementations, the second preset distance may alternatively be determined according to a current moving speed of the self-moving device, or may be preset according to moving speed information included in product information of the self-moving device. For example, the second preset distance may be dynamically adjusted/determined in real time according to the current moving speed, different speed value intervals may be preset, and different speed value intervals correspond to corresponding second preset distances. Generally, a faster moving speed indicates a larger second preset distance that is set. The second preset distance may alternatively be preset according to the moving speed information included in the product information of the self-moving device. For example, the product information clearly indicates a speed value for normal operation of the self-moving device, or speed values in different gears. Certainly, different models, sizes, and operating environments also correspond to corresponding product information and have corresponding form speed information accordingly.

The second preset distance in this embodiment may be set and adjusted according to operating requirements or different model sizes or moving wheel sizes of the self-moving device. The moving wheel not only includes a conventional circular wheel, but may also include a track, a polygonal wheel, and the like. For ease of description, all these wheels may be collectively referred to as a moving wheel in some embodiments of this specification.

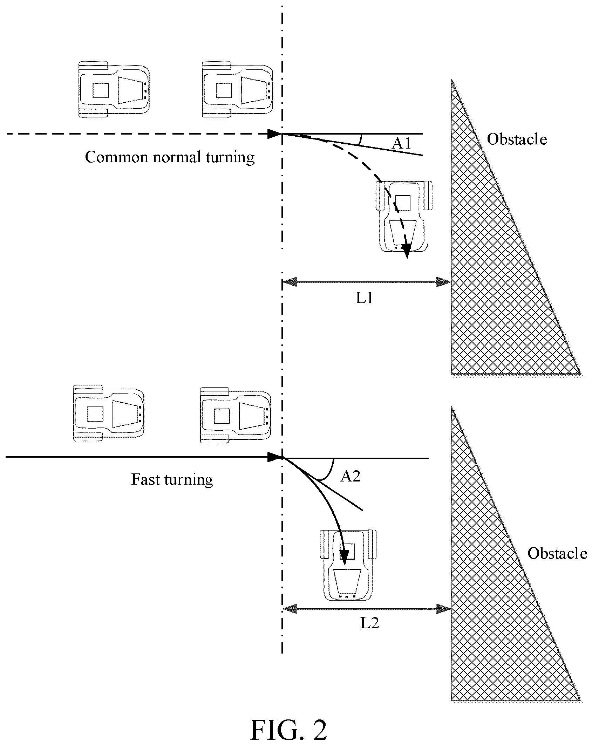

FIG. 2 is a schematic diagram of scenario comparison of an embodiment in which a self-moving device turns fast at a large angle to avoid an obstacle provided in this specification. A dotted line part is a schematic diagram of a common normal turning route, and a solid line part is a schematic diagram of a fast large-angle turning route. A1 is a turning angle of normal turning, A2 is a large turning angle, and A2 is greater than A1. It can also be learned from FIG. 2 that when the self-moving device provided in this specification determines that turning needs to be performed, turning may be performed at a faster turning speed and a larger turning angle, and time to complete turning is shorter than that of common normal turning, which reserves more operating regions, so that there is more time to operate in a region of an original moving route before turning (a smaller turning distance may be set, and L2 is less than L1). The self-moving device of this embodiment may complete turning in a timelier and safer manner while ensuring as many operating regions as possible for the self-moving device, thereby improving the safety and reliability of turning of the self-moving device.

The self-moving device in this embodiment of this specification may further include an obstacle detector 12, further include an obstacle detector. The obstacle detector 12 is connected to the controller 14 of the main body 100, and the obstacle detector 12 may be configured to: obtain detection data of the obstacle, obtain the distance between the self-moving device and the obstacle according to the detection data, and send the distance to the controller 14, or send obtained detection data of the obstacle to the controller 14, to cause the controller 14 to determine the distance between the self-moving device and the obstacle according to the detection data.

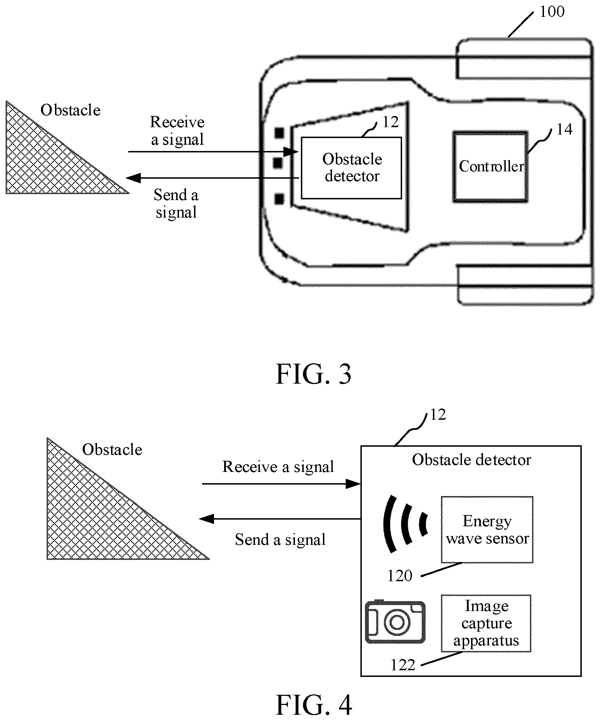

FIG. 3 is a schematic structural diagram of an embodiment of a self-moving device according to an exemplary embodiment. As shown in FIG. 3, in the self-moving device according to this embodiment of this specification, the obstacle detector 12 may obtain at least the detection data of the obstacle. A method for obtaining the detection data of the obstacle may include a self-transmitting and self-receiving manner, that is, the obstacle detector 12 may emit an energy wave such as an ultrasonic wave, a laser, and the like by itself, and receive a reflected signal to obtain data information; and may also include a manner of obtaining obstacle feedback data transmitted by a third party, such as the detection data of the obstacle sent by an external device or a remote server by using a wireless network. It should be understood that in some embodiments of this specification, the detection data may include received original data information, such as an analog signal received by the obstacle detector 12, which may include an amplitude, a frequency, a phase, and the like of the signal. In some other embodiments, the detection data may also include data information obtained by performing processing such as conversion, filtering, and the like on the original data information. For example, the obstacle detector 12 may perform analog-to-digital conversion on the received original data information. Certainly, the step of performing processing on the original data information may also be performed by the controller 14.

In some other embodiments, another device may obtain the detection data, calculate the distance between the self-moving device and the obstacle according to the detection data, and then send the distance to the controller 14, for example, a base station, a remote server, or another device that directs the self-moving device to move. For ease of description, in this embodiment, a device that sends the distance information (including the distance between the self-moving device and the obstacle) to the controller 12 and is indirectly mechanically connected to the self-moving device may be collectively referred to as a server, such as the base station, the remote server, and the like described above. Therefore, in another embodiment of the self-moving device provided in the present disclosure, the determining a distance between the self-moving device and an obstacle includes:
determining the distance between the self-moving device and the obstacle according to the received distance information sent by the service.

In this way, the self-moving device may determine the distance without the obstacle detector mounted on the self-moving device, so that a weight and a data processing requirement of the self-moving device may be reduced, and the movement convenience, operational flexibility, and data processing reliability (less data needs to be processed) of the self-moving device may be improved.

FIG. 4 is a schematic structural diagram of a self-moving device according to an exemplary embodiment. As shown in FIG. 4, the obstacle detector in the self-moving device may include the capability wave sensor, and may also include an image capture apparatus. Certainly, the obstacle detector may alternatively include both. Specifically, the obstacle detector 12 may include at least one of the following:
an energy wave sensor 120, configured to emit an energy wave and receive a reflected signal of the energy wave, where the detection data includes measurement data of the energy wave; and
an image capture apparatus 122, configured to obtain image data of the obstacle, where the detection data includes measurement data of the energy wave. The controller 14 may determine the distance to the obstacle according to an identification processing result of the image data.

In another embodiment of the self-moving device, the obstacle detector 12 may be a sensor based on an energy wave (which may be briefly referred to as an energy wave sensor). The energy wave may include propagating energy in the form of waves, and the waves may include a mechanical wave, an electromagnetic wave, and a material wave. Specifically, the sensor based on an energy wave may include an ultrasonic sensor, an infrared sensor, a ray sensor (such as a γ ray), and the like. The energy wave sensor may emit a corresponding energy wave and receive a reflected signal of the energy wave. For example, the ultrasonic sensor may emit an ultrasonic signal and receive an ultrasonic reflected signal reflected back by a target. In this way, the controller may calculate the distance to the obstacle according to the emitted energy wave and the reflected signal.

In another embodiment of the self-moving device, the obstacle detector 12 may include an image capture apparatus, for example, a picture taking or video recording apparatus. The image capture apparatus may obtain image data of the self-moving device in at least the moving direction, and may perform identification processing according to the image data to determine the distance to the target (obstacle). Specifically, some image algorithms or machine learning models/networks may be used to identify the distance to the target according to the image data. For example, a harris corner (harris corner) point method may be used to detect a corner point, and an initial matching point pair may be obtained based on an open source computer vision library (open source computer vision library, OPENCV) method. Then a matching feature point pair may be guided based on a random sample consensus (random sample consensus, RANSAC) algorithm, and the distance to the obstacle may be predicted by using a parallax principle.

In another embodiment of the self-moving device in the present disclosure, the controller 14 may further be configured to:
adjust a value of the second preset distance.

According to a parameter correspondence between the second preset distance, the turning speed, and the preset turning angle, a turning speed and/or a large turning angle corresponding to an adjusted second preset distance are/is correspondingly modified.

The parameter of the self-moving device in some embodiments of this specification may further be adjusted, which may be pre-adjusted before operation, optimized and adjusted after operation, or adjusted in real time in an operating process. The parameter correspondence between the second preset distance, the turning speed, and the preset turning angle may be preset, so that when the second preset distance is adjusted, the turning speed and/or the preset turning angle are/is adjusted simultaneously, thereby effectively ensuring the safety of the self-moving device in avoiding the obstacle and the reliability of an avoidance strategy. For example, the rotation speed of the moving wheel during normal moving is 33 revolutions per minute. When the second preset distance is set to 25 cm, the rotation speed of the outer row is 38 revolutions per minute, and the preset turning angle is 35 degrees. If the value of the second preset distance is adjusted to 20 cm, since the turning distance becomes shorter, it is necessary to complete turning faster and avoid the obstacle. Therefore, the rotation speed of the outer moving wheel may be adjusted to 45 revolutions per minute and the preset turning angle is adjusted to 45 degrees according to the predetermined parameter correspondence. In this way, since the rotation speed of the outer moving wheel is improved, the time to complete turning is shortened, and turning is completed faster. In addition, the turning angle is also larger and the obstacle may be avoided better.

Since the turning distance becomes shorter, it is necessary to complete turning faster and avoid the obstacle. Therefore, in some embodiments of the present disclosure, a correspondence between the second preset distance and the preset turning angle is a negative correlation.

In another exemplary embodiment in the present disclosure, the controller 14 is further configured to:
when it is detected that the distance to the obstacle is less than an alert distance, increase a data processing speed, or send an alert processing signal to the obstacle detector 12, where the alert processing signal is used for controlling the obstacle detector 12 to increase a detection frequency on the obstacle.

The detection frequency may include a frequency at which the obstacle detector transmits a signal. Increasing data processing may include allocating more hardware resources and software resources (such as a thread, increasing processor frequency, and the like), and shortening a calculation cycle. When the distance between the self-moving device and the obstacle is less than a turning alert distance, timelier and more accurate detection is required to adjust the turning angle and the turning speed in time. Therefore, in this embodiment, the data processing speed of the controller 14 may be increased. For example, the processor is enabled to perform data processing in an overclocked state, or a frequency of an ultrasonic emission signal is increased, and a processing speed of the controller 14 for a reflected signal is increased simultaneously. In this way, the self-moving device increases the data processing speed or the detection frequency on the obstacle, so that the obstacle may be avoided in time and the safety of the obstacle and the self-moving device may be effectively ensured.

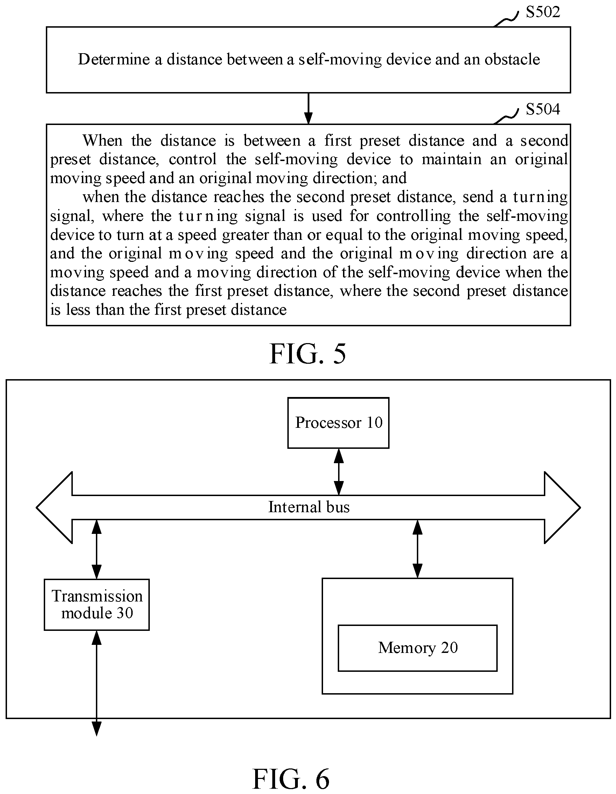

FIG. 5 is a schematic flowchart of an obstacle avoidance control method for a self-moving device according to an exemplary embodiment. As shown in FIG. 5, the method may include the following steps.

S502: Determine a distance between the self-moving device and an obstacle.

S504: When the distance is between a first preset distance and a second preset distance, control the self-moving device to maintain an original moving speed and an original moving direction; and
when the distance reaches the second preset distance, send a turning signal, where the turning signal is used for controlling the self-moving device to turn at a speed greater than or equal to the original moving speed, and the original moving speed and the original moving direction are a moving speed and a moving direction of the self-moving device when the distance reaches the first preset distance, where the second preset distance is less than the first preset distance.

As the embodiment of the self-moving device described above, in another embodiment of the method disclosed in this specification, a value range of the second preset distance is from 10 cm to 20 cm, and/or a value range of the preset turning angle for turning is from 30 degrees to 60 degrees.

As the embodiment of the self-moving device described above, in another embodiment of the method disclosed in this specification, the step of determining a distance between the self-moving device and an obstacle includes at least one of the following: determining the distance to the obstacle based on obstacle feedback detection data obtained by an energy wave sensor; and determining the distance between the obstacle feedback data and the obstacle based on image data obtained by an image capture apparatus.

As the embodiment of the self-moving device described above, in another embodiment of the method disclosed in this specification, a value range of the first preset distance is from 40 cm to 60 cm.

As the embodiment of the self-moving device described above, in another embodiment of the method disclosed in this specification, the second preset distance is determined according to a current moving speed of the self-moving device, or is preset according to moving speed information included in product information of the self-moving device.

That is, a corresponding turning distance may be determined according to a real-time speed of the self-moving device. For example, a safe turning distance may be determined according to a preset correspondence table or relationship function, or the safe turning distance may be reserved in advance according to a moving speed of a product model.

As the embodiment of the self-moving device described above, in another embodiment of the method disclosed in this specification, that the control signal is used for controlling the self-moving device to turn at a speed greater than or equal to the original moving speed includes:
turning at a first speed difference, where the first speed difference is that in the moving direction of the self-moving device, a rotation speed of a moving wheel on a side is faster than a rotation speed of a moving wheel on another side by a first percentage.

As the embodiment of the self-moving device described above, in another embodiment of the method disclosed in this specification, the controlling the self-moving device to turn at a speed greater than or equal to the original moving speed includes:
controlling the self-moving device to continue turning at a first turning rate for a preset time length to complete turning.

As the embodiment of the self-moving device described above, in another embodiment of the method disclosed in this specification, the determining a distance between the self-moving device and an obstacle includes at least one of the following:
determining the distance between the self-moving device and the obstacle according to obtained detection data of the obstacle;
determining the distance between the self-moving device and the obstacle according to received distance information sent by a server; and
determining the distance between the self-moving device and the obstacle according to received distance information sent by an obstacle detector.

As the embodiment of the self-moving device described above, in another embodiment of the method disclosed in this specification, the method further includes:
when the distance to the obstacle is less than an alert distance, increasing a data processing speed, or controlling the obstacle detector to increase a detection frequency on the obstacle.

Based on the foregoing description, the present disclosure further provides another obstacle avoidance control method for a self-moving device, including:
receiving a first control instruction of a server, where the first control instruction is used for controlling the self-moving device to determine a distance between the self-moving device and an obstacle; when the distance is between a first preset distance and a second preset distance, controlling the self-moving device to maintain an original moving speed and an original moving direction; and when the distance reaches the second preset distance, sending a turning signal, where the turning signal is used for controlling the self-moving device to turn at a speed greater than or equal to the original moving speed, and the original moving speed and the original moving direction are a moving speed and a moving direction of the self-moving device when the distance reaches the first preset distance, where the second preset distance is less than the first preset distance.

It can be understood that the embodiments of the self-moving device, the method, and the device of this specification are all described in a progressive manner, for same/similar parts in the embodiments, reference can be made to the embodiments, and description of each embodiment focus on differences from other embodiments. For related parts, reference can be made to description and explanation in other method embodiments. For example, the method, according to the embodiment description of the self-moving device, can also include adjusting a value of the second preset distance, or when it is detected that the distance to the obstacle is less than an alert distance, increasing a data processing speed, or controlling an obstacle detector to increase a detection frequency on the obstacle. Methods implemented on the self-moving device in this specification to avoid an obstacle are included in the scope of the method described in this application.

It should be understood that although the steps of the flowcharts in the figures are shown sequentially according to arrows, the steps are not necessarily performed according to an order indicated by the arrows. Unless otherwise clearly specified in this specification, the steps are performed without any strict order limit, and may be performed in other orders. In addition, at least some steps in the figures may include a plurality of steps or a plurality of stages. The steps or the stages are not necessarily performed at a same moment, but may be performed at different moments. The steps or the stages are not necessarily performed in sequence, but may be performed in turn or alternately with another step or at least some of steps or stages of the another step.

FIG. 6 is a schematic structural diagram of a controller 14 provided in this specification. One or more (only one is shown in the figure) processors 10 (the processors 10 may include but are not limited to processing apparatuses such as a microprocessor MCU or a programmable logical device FPGA), a memory 20 configured to store data, and a transmission module 30 configured to perform a communication function may be included. A person of ordinary skill in the art can understand that a structure shown in FIG. 6 is only an example, and does not constitute a limitation on a structure of the self-moving device or the controller. For example, the controller 14 may alternatively include more or fewer devices than those shown in FIG. 6, for example, may alternatively include an internal memory, a database or a multi-level cache, and an image processor, or have other configurations different from those shown in FIG. 6.

In an exemplary embodiment, a storage medium including computer-readable instructions is further provided, for example, a memory including computer-readable instructions. The instructions may be executed by a processor of a device to perform the foregoing method. The storage medium is a non-transitory computer-readable storage medium. For example, the nonvolatile computer-readable storage medium may be a ROM, a random access memory (RAM), a CD-ROM, a magnetic tape, a floppy disk, an optical data storage device, or the like; or a readable storage medium in another form, for example, a quantum memory, a graphene memory, and the like.

In an exemplary embodiment, a computer program product is further provided, including a computer program. When the computer program is executed by a processor, the method according to any embodiment of the present disclosure is implemented, or code of the computer program is recorded in a storage unit of the self-moving device according to any embodiment of the present disclosure.

The embodiments in this specification are described in a progressive manner, and the same or similar parts between the various embodiments can be referred to each other. Each embodiment focuses on differences from other embodiments.

It should be noted that the method, the self-moving device, and the storage medium may further include other implementations according to the description of the method or device embodiments. For specific implementations, reference may be made to the description of relevant method or device embodiments. In addition, new embodiments formed by combining features of various method, device, and storage medium embodiments still fall within the implementation scope covered by the present disclosure, and details are not described herein again.

For ease of description, when the foregoing self-moving device is described, the self-moving device is divided into modules according to functions, which are separately described. Certainly, during implementation of one or more embodiments of this specification, the functions of the modules may be implemented in a same piece of or a plurality of pieces of software and/or hardware, or modules implementing a same function may be implemented by using a combination of a plurality of submodules or subunits. The described device embodiments are merely exemplary. For example, division of the energy wave sensor and the image capture apparatus is merely logical function division and there may be other division manners during actual implementation. For example, a plurality of units or components may be combined or integrated into another system, or some features may be ignored or not performed. In addition, the coupling, communication connection, and the like between apparatuses or units displayed or described in the self-moving device may be realized by direct and/or indirect coupling/connection, or implemented through some standard or customized interfaces, protocols, and the like, or implemented in an electrical, mechanical, or another form.

A person skilled in the art can easily figure out other implementation solutions of the present disclosure after considering the specification and practicing the present embodiments disclosed herein. The present disclosure is intended to cover any variation, use, or adaptive change of the present disclosure. The variations, uses, or adaptive changes follow the general principles of the present disclosure and include common general knowledge or common technical means in the art that are not disclosed in the present disclosure. The specification and the embodiments are considered as merely exemplary, and the scope and spirit of the present disclosure are pointed out in the following claims.

It should be understood that the present disclosure is not limited to the precise structures described above and shown in the accompanying drawings, and various modifications and changes can be made without departing from the scope of the present disclosure.

## Claims

1. A self-moving device, comprising:
a main body; and
a controller, the controller being disposed in the main body, and the controller being configured to:
determine a distance between the self-moving device and an obstacle;
when the distance is between a first preset distance and a second preset distance, control the self-moving device to maintain an original moving speed and an original moving direction; and
when the distance reaches the second preset distance, send a turning signal, wherein the turning signal is used for controlling the self-moving device to turn at a speed greater than or equal to the original moving speed, and the original moving speed and the original moving direction are a moving speed and a moving direction of the self-moving device when the distance reaches the first preset distance, wherein the second preset distance is less than the first preset distance.

2. The self-moving device according to claim 1, wherein the turning signal is further used for controlling the self-moving device to turn at a preset turning angle.

3. The self-moving device according to claim 1, wherein:
a value range of the first preset distance is from 40 cm to 60 cm; and
a value range of the second preset distance is from 10 cm to 20 cm.

4. The self-moving device according to claim 1, wherein the second preset distance is determined according to a current moving speed of the self-moving device, or is preset according to moving speed information comprised in product information of the self-moving device.

5. The self-moving device according to claim 1, wherein that the control signal is used for controlling the self-moving device to turn at a speed greater than or equal to the original moving speed comprises:
turning at a first speed difference, wherein the first speed difference is that in the moving direction of the self-moving device, a rotation speed of a moving wheel on a side is faster than a rotation speed of a moving wheel on another side.

6. The self-moving device according to claim 1, wherein the controlling the self-moving device to turn at a speed greater than or equal to the original moving speed comprises:
controlling the self-moving device to continue turning at a first turning rate for a preset time length.

7. The self-moving device according to claim 1, further comprising an obstacle detector, wherein the obstacle detector is connected to the controller of the main body, and the obstacle detector is configured to: obtain detection data of the obstacle, obtain the distance between the self-moving device and the obstacle according to the detection data, and send the distance to the controller, or send obtained detection data of the obstacle to the controller, to cause the controller to determine the distance between the self-moving device and the obstacle according to the detection data.

8. The self-moving device according to claim 7, wherein the obstacle detector comprises at least one of following:
an energy wave sensor, configured to emit an energy wave and receive a reflected signal of the energy wave, wherein the detection data comprises measurement data of the energy wave;
an image capture apparatus, configured to obtain image data of the obstacle, wherein the detection data comprises the image data.

9. The self-moving device according to claim 2, wherein a correspondence between the second preset distance and the preset turning angle is a negative correlation.

10. The self-moving device according to claim 7, wherein the controller is further configured to:
when the distance to the obstacle is less than an alert distance, increase a data processing speed, or send an alert processing signal to the obstacle detector, wherein the alert processing signal is used for controlling the obstacle detector to increase a detection frequency on the obstacle.

11. An obstacle avoidance control method for a self-moving device, comprising:
determining a distance between the self-moving device and an obstacle;
when the distance is between a first preset distance and a second preset distance, controlling the self-moving device to maintain an original moving speed and an original moving direction; and
when the distance reaches the second preset distance, sending a turning signal, wherein the turning signal is used for controlling the self-moving device to turn at a speed greater than or equal to the original moving speed, and the original moving speed and the original moving direction are a moving speed and a moving direction of the self-moving device when the distance reaches the first preset distance, wherein the second preset distance is less than the first preset distance.

12. A computer-readable storage medium, wherein when instructions in the storage medium are executed by a processor of an electronic device, the electronic device is caused to perform the method according to claim 11.
